# EUROPEAN PATENT SPECIFICATION

(11) **EP 1 667 388 B1**
(45) Date of publication and mention of the grant of the patent: **14.07.2010**
(21) Application number: 04257540.7
(22) Date of filing: 03.12.2004
(51) Int. Cl.: H04L 12/58

(54) **Method and apparatus for efficient resending of messages using message ID**
Verfahren und Vorrichtung zum effizienten wiederholten Senden von Nachrichten mittels einer Nachrichten ID
Procédé et dispositif pour la retransmission efficace de messages en utilisant une information d'identification de message

(43) Date of publication of application: 07.06.2006
(73) Proprietor: Research In Motion Limited, Waterloo, Ontario N2L 3W8 (CA)
(72) Inventor: Burns, Anthony G., Waterloo, Ontario, N2K 2X4 (CN); Hardy, Michael T., Waterloo, Ontario, N2T 2J8 (CN); May, Darrell R., Waterloo, Ontario, N2V 2K6 (CN)
(74) Representative: Roberts, Gwilym Vaughan

(56) References cited:
- EP-A- 1 339 195
- WO-A-03/026235

## Description

### BACKGROUND

### 1. Technical Field

This invention relates to apparatus, method and stored computer program media for managing "messages sent" files and/or resending of messages from mobile wireless communication devices.

### 2. Related Art

Various email systems are now well known and utilized by millions on a daily basis. Email systems typically maintain a stored file or folder containing current opened and unopened mail, previously sent mail, messages that have been "deleted" (e.g., in a "trash" file until also deleted therefrom), email address files for various categories of parties with whom communications have been made or may be made in the future (e.g., an "address book") and the like. Sometimes email systems also incorporate calendar, personal contact data, documents, check lists and the like as well.

Besides composing new email messages and sending them, most systems also include features for forwarding received emails onward to other recipients and for resending previously sent messages (e.g., possibly retracting the earlier message in favor of a later version or possibly sending the same message on to additional recipients or possibly resending a message which for some reason went astray and was never acknowledged or actually received by the intended recipient.

Such email systems become considerably more complicated when they include mobile wireless communication devices as well as a user's base PC or enterprise message server or the like. In this more complex email system, a given email message may have originated at the user's desktop PC (or at somebody else's PC or otherwise) or may have originated in the first instance from the mobile wireless communication device itself. It is thus possible that the file of previously sent messages maintained in the mobile wireless communication device is not always synchronized (i.e., identical in content) with the file of previously sent messages for that particular user (in either the user's desktop PC base unit or a message server associated therewith for an entire enterprise). While synchronization of address books and the like between a user's PC base unit and a mobile PDA or the like has been known for some time, many if not all prior email systems incorporating mobile wireless communication devices have apparently not maintained well synchronized "message sent" files. Perhaps at least partially for such reasons, when a message is being resent from a user's mobile wireless communication device, it has heretofore typically involved resending of the entire message (e.g., the message header and message body text in full) from the mobile wireless communication device to an enterprise message server or the like (from which that particular message was then re-iterated to the same or new message recipients).

At the same time, typically such prior email systems incorporating mobile wireless communication devices have for a long time used a shortcut technique for effecting replies to received messages and/or forwarding of received messages from the mobile wireless communication device. In particular, since in such instances the received message must already be resident at the enterprise message server which sent it to the mobile wireless communication device, rather than including the entire received message text in a reply to or forwarding of that message, an abbreviated unique reference ID was instead transmitted back to the enterprise message server. This reference ID was then treated as a request to find the appropriate uniquely associated message and then to add the reply text thereto and send it onward and/or to forward the message (possibly also with additional added message text).

However, in spite of the fact that such shortcut techniques/protocols have been in existence for many years in this context for replying to and/or forwarding incoming messages from a mobile wireless communication device, it does not appear that analogous shortcut technique previously has been used for resending previously sent messages. In the past, when a message was resent from the mobile device, the entire contents of the message was sent from the device to the server. In some cases, particularly if there is not complete 100% current message syncing of the sent message files), not all previously sent message information (e.g., message body text) may be available at the mobile wireless communication device. However (particularly if synchronization of sent files is well maintained), then full message information for each previously sent message is likely to be already available at the server. Nevertheless, the prior art practice effectively has ignored this situation and required redundant message information to be sent across the wireless network which has been a waste of network -- bandwidth and device battery.

WO 03/026235 A1 describes a system wherein a mail database and a mobile communication device are associated with a user address and wherein data items are stored in the mail database and referenced by corresponding mail database identifiers.

EP 1 339 195 A2 describes a method and device for attaching documents to email wherein an instruction is sent from a mobile wireless device to a server. The instruction identifies a required document, but does not include the document itself.

### BRIEF SUMMARY

We have now recognized that it is possible to avoid such needless waste of wireless bandwidth and/or device battery.

The invention is set out in the accompanying claims.

The exemplary embodiments initially sends to the server only an abbreviated (but unique reference ID of the message to be resent, similar to what has previously been done for replies and forwards. If the server recognizes the reference ID (i.e., has the message already stored) it simply resends that particular message. If not, the server informs the device that the received reference ID is unknown, and the device then sends the entire message (as it knows it) back to the server for resending.

This saves network bandwidth because in most cases the server already will have the original sent message available. When the server does not (hopefully a rare occurrence if the "sent message" files are frequently synchronized), the prior mechanism of requesting the device's version of the complete message is still available, so there is no downgrade of service from the user's perspective.

As may be noted, this is related to the previous protocol used when doing replies and forwards from the device. It has now become apparent that this needs to be extended to resends, particularly with the introduction of syncing of sent items - but wherein the syncing may also be abbreviated such that only message headers and reference ID's are regularly maintained at the device (i.e., for messages originating elsewhere). In this case, the device typically does not have the entire message on the device (just the message header) and typical prior implementations would require the device to request the entire message to be delivered to the device before the user could then resend that same message back from the device.

The exemplary protocol now allows resend from the mobile device by using, in most cases, only the message reference ID. That is, to resend the server now resends the original message as is (using the reference ID supplied by the device to find it). The identified message is simply found by the server and resent. If the message cannot be found by the server, the server responds with a transaction error. The device then sends the data that it has for this message (forward, reply or resend). Benefits of sending a reference ID (versus actual full message text data) at least include significant reduction in required network bandwidth and reduced device battery load. For example, in most cases, only a relatively small-sized reference ID will be required for sending to the server - rather than the whole message itself (which could be thousands of bytes).

For various reasons (in general, to save memory space on the device), the original message body may be truncated on the device. This is certainly true for messages that were originally sent from the user's desktop, but may also be true for messages truncated due to low memory storage conditions on the device. It is clearly a preferred method to not have to always download the entire message body to the device just to resend the same message back to the server from the device.

The invention may be embedded in hardware, software or a combination of hardware and software. The invention provides a method for achieving enhanced management of "messages sent" files and/or the resending of messages from mobile wireless communication devices. The exemplary embodiment is realized, in part, by executable computer program code (i.e., logic) which may be embedded in physical program memory media.

### BRIEF DESCRIPTION OF THE DRAWINGS

These and other objects and advantages of this invention will be more completely understood and appreciated by careful study of the following more detailed description of at least one exemplary embodiment in conjunction with the accompanying drawings, in which:

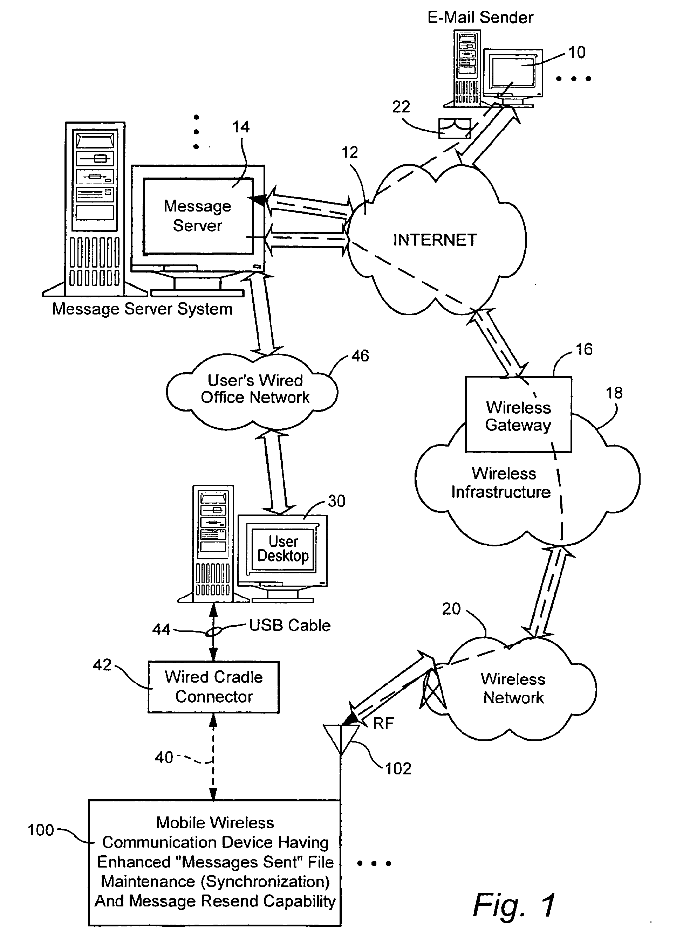

FIG. **1** is an overall system wide schematic view of an exemplary wireless email communication system incorporating a mobile wireless communication device having enhanced "messages sent" file maintenance (synchronization) and message resend capability in accordance with one exemplary embodiment of this invention;

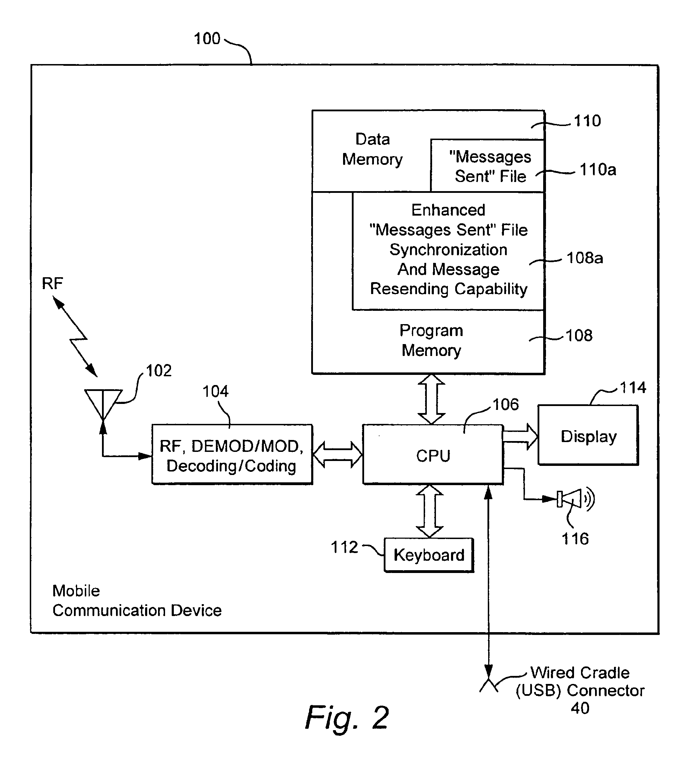

FIG. **2** is an abbreviated schematic diagram of hardware included within an exemplary mobile wireless communication device of FIG. **1****;**

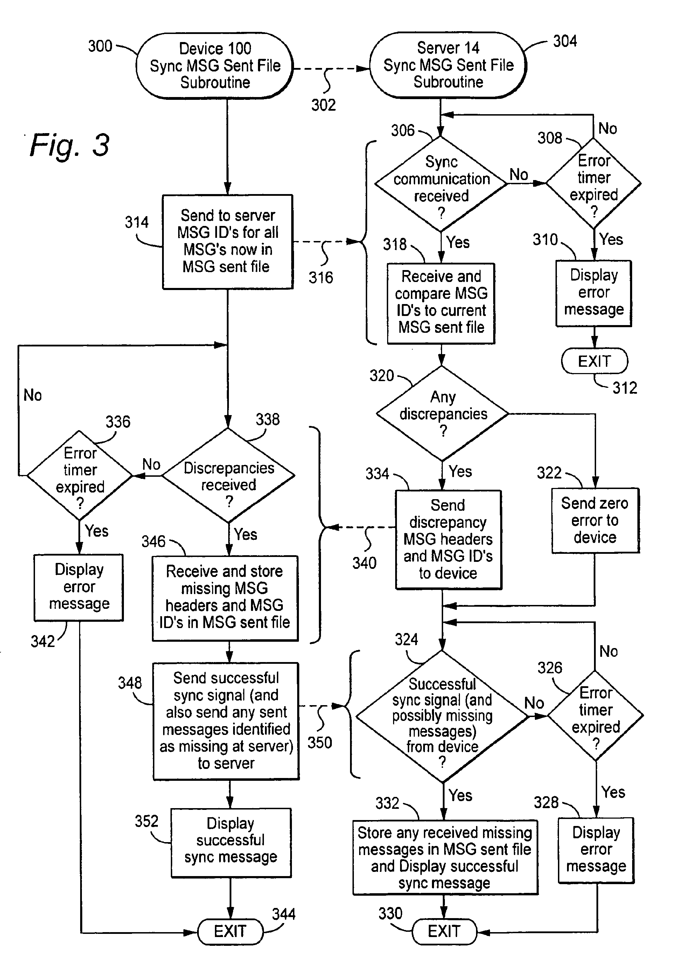

FIG. **3** is an exemplary abbreviated schematic flowchart of computer software (i.e., program logic) that may be utilized, in parallel, in the device of FIG. **2** and the message server of FIG. **1** to achieve an exemplary synchronization of "message sent" files at the device and server sides, respectively; and

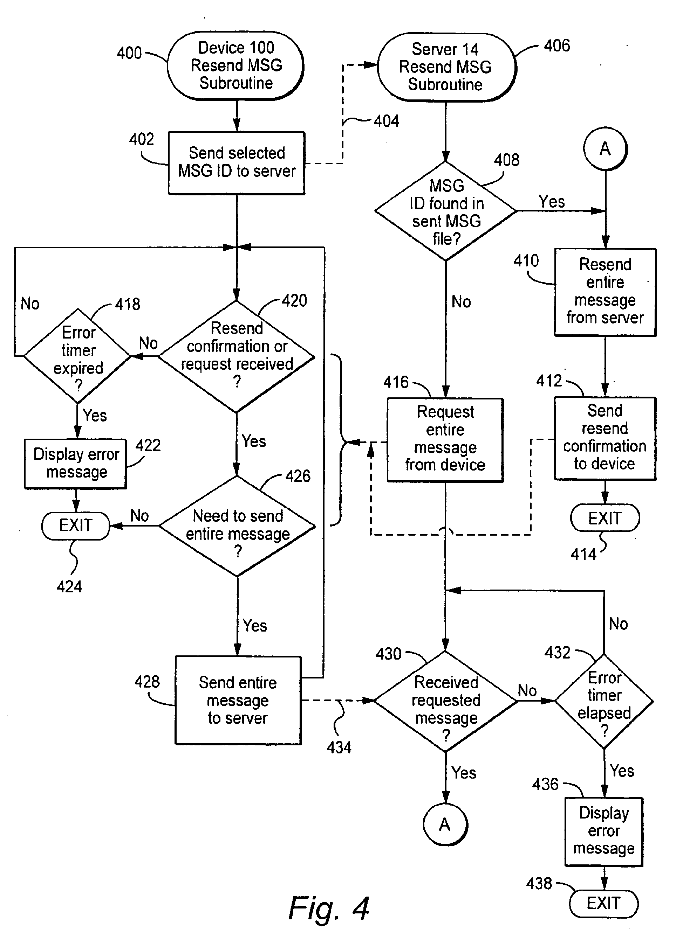

FIG. **4** is an exemplary of abbreviated schematic flowchart of computer software (i.e., program logic) that may be utilized in the device of FIG. **2** and the message server of FIG. **1** to achieve a more efficient resend message functionality in the device and server, respectively.

### DETAILED DESCRIPTION OF EXEMPLARY EMBODIMENTS

FIG. **1** is an overview of an exemplary communication system in which a wireless communication device **100** (with an optional wired connection port **40)** may be used in accordance with this invention. One skilled in the art will appreciate that there may be hundreds of different system topologies. There may also be many message senders and recipients. The simple exemplary system shown in FIG. **1** is for illustrative purposes only, and shows perhaps the currently most prevalent Internet e-mail environment.

FIG. **1** shows an e-mail sender **10,** the Internet **12,** a message server system **14,** a wireless gateway **16,** wireless infrastructure **18,** a wireless network **20** and a mobile communication device **100.**

An e-mail sender **10** may, for example, be connected to an ISP (Internet Service Provider) on which a user of the system has an account, located within a company, possibly connected to a local area network (LAN), and connected to the Internet **12,** or connected to the Internet **12** through a large ASP (application service provider) such as American Online™ (AOL). Those skilled in the art will appreciate that the systems shown in FIG. **1** may instead be connected to a wide area network (WAN) other than the Internet, although e-mail transfers are commonly accomplished through Internet-connected arrangements as shown in FIG. **1****.**

The message server **14** may be implemented, for example, on a network computer within the firewall of a corporation, a computer within an ISP or ASP system or the like, and acts as the main interface for e-mail exchange over the Internet **12.** Although other messaging systems might not require a message server system **14,** a mobile device **100** configured for receiving and possibly sending e-mail will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. **1****,** as they do not directly play a role in the invention described below. Message servers such as server **14** typically extend beyond just e-mail sending and receiving; they also include dynamic database storage engines that have predefined database formats for data like calendars, to-do lists, task lists, e-mail and documentation.

The wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1****,** a composed e-mail message **22** is sent by the e-mail sender **10,** located somewhere on the Internet **12.** This message **22** typically uses traditional Simple Mail Transfer Protocol (SMTP), RFC **822** headers and multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific e-mail address associated with the mobile device **100.** In a preferred embodiment, messages addressed to a message server account associated with a host system such as a home computer or office computer **30** which belongs to the user of a mobile device **100** are redirected from the message server **14** to the mobile device **100** as they are received.

Regardless of the specific mechanism controlling forwarding of messages to mobile device **100,** the message **22,** or possibly a translated or reformatted version thereof, is sent to wireless gateway 16. The wireless infrastructure **18** includes a series of connections to wireless network **20.** These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

The wireless RF communication port connection is made via antenna **102** as depicted in FIG. **1****.** However, the mobile wireless/wired communication device **100** also typically has a wired (or perhaps wireless irda, Bluetooth, etc.) connection port **40** which mates with a connection in a wired cradle **42** to establish a wired digital communication link via a USB cable **44** to USB port of the user desktop computer **30.** As will be appreciated, the user's computer **30** is also connected to the user's wired office network **46** (as is the message server **14).**

As depicted in FIG. **2****,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **110** and a message sent file **110a).** CPU **106** also communicates with a conventional keyboard **112,** display **114** (e.g., an LCD) and audio transducer or speaker **116.** A portion of program memory **108a** is available for storing an enhanced messages sent file synchronization and message resending sub-routine (which may also interface with and use an IT Policy resident in data memory **110).** Suitable computer program executable code is stored in portions of program memory **108a** to constitute the enhanced sub-routine logic described below. As also depicted in FIG. **2****,** the CPU **106** is typically connected to a wired cradle USB connector **40** (which is, in effect, a USB port).

In the preferred exemplary embodiment, provisions are made for maintaining at least partial synchronization of the messages sent files stored at the server **14** and the mobile wireless communication device **100.** The exemplary embodiment of synchronization is referred to as "partial" because the messages sent file at the device **100** may not include full text for each message but, instead, only an abbreviated reference ID (preferably with header data sufficient to be user-recognizable) or the like to identify uniquely a particular previously sent message. At the same time, the server **14** will generally have a copy of the complete text of all previously sent messages in its messages sent file. Of course, as those in the art will appreciate, there typically will be conventional file housekeeping features available to permit purging records from the message sent files as may be desired by the user (or as necessitated by maximum file capacity or the like to avoid an excessive number of entries in a message sent file for a particular user).

As depicted in FIG. **3****,** the device synchronization messages sent file sub-routine **300** may be activated by a user at device **100.** This causes a suitable "begin sync" signal **302** to be sent to the server **14** so as to also initiate the server synchronization message sent file sub-routine at **304.** During most, if not all, of the synchronization process, both sub-routines **300** and **304** are active. The server may thereafter simply wait for an expected synchronization communication **316** to be received (e.g., in a timed wait loop **306, 308).** If the expected synchronization communication **316** is not timely received from the device, then an error message is displayed at **310** and the server sub-routine is exited at **312.**

However, if the device sub-routine is operating successfully, then suitable synchronization message **316** will be generated at **314** and sent to the server. In an elementary implementation, this synchronization communication might include a listing of all message reference ID's for all messages now listed in the "messages sent" file at the device. However, as those in the art will appreciate, there are known file synchronization protocols and techniques that can, at least some of the time, make it unnecessary to exchange complete file content lists.

When the synchronization message from the device **100** is timely received, then it is processed at **318** so as to, in effect, compare (a) the received list of message ID's from the sent messages file at the device to (b) the current messages sent file content at the server. As previously noted, those in the art will appreciate that a laborious comparison of each and every entry in both files at each sync session can be avoided if desired under some circumstances.

If discrepancies are discovered at **320,** then suitable discrepancy data is generated (e.g., identify messages missing in either the device and server) and sent back to the device at **334 -** before the timed wait loop **324, 326** is entered. If no discrepancies are noted at **320**, then a zero error (i.e., synchronized) signal will be sent back to the device at **322** and another timed wait loop **324, 326** is then entered to await a successful synchronization signal (and message text for messages previously identified as missing at the server) back from the device. If this is not timely received from the device, then the received previously messages are stored and an error message may be displayed at **328** and the routine exited at **330.** Otherwise, if a successful synchronization signal from the device is timely received, then a successful synchronization message is displayed at **332** before exit is taken at **330.**

At the device **100,** after the initial synchronization data **316** is transmitted at **314,** a timed wait loop **336, 338** is entered to see if any discrepancies have been noted by the server in a return communication **340.** If the expected discrepancy data message **340** is not timely received, then an error message is displayed at **342** and exit of the sub-routine is taken at **344.** On the other hand, if a timely return message **340** is received, then it is processed at **346** so as to store missing message headers and message reference ID's or the like as may be necessary so as to synchronize (but preferably only partially) messages sent file at the device **100.** Upon completion of this processing, further processing is done at 348 so that any discovered missing messages at the server are sent to the server at 350 and/or a successive synchronization signal is generated and sent back to the server. A successful synchronization message is displayed at **352** before the device sub-routine is exited at **344.**

When synchronized messages sent files are frequently maintained at the device and server as already explained with respect to FIG. **3****,** then it is possible to more frequently than not save bandwidth and device battery by employing a resend message protocol such as depicted in FIG. **4****.** Here, for example, if a user wishes to resend a message from the device **100,** then a resend message sub-routine is entered at **400** and, using user-recognizable message identifying data (e.g., all or part of the message header data) available in the local sent messages file, only an abbreviated message reference ID is accessed (e.g., also available from the local sent messages file) at **402** and transmitted at **404** to the server **14.** This causes the server **14** to enter its enhanced resend message sub-routine at **406.** At **408,** the server **14** looks for the incoming message reference ID in its own, more complete, sent messages file. If such message is found to reside there in its entirety (which is most likely to happen in the exemplary embodiment), then the entire message is resent at **410** from the server and a confirmation of that event is sent at **412** back to device 100 before exit is taken at **414.** On the other hand, in the event (hopefully rare) that the server cannot find the message referenced by the incoming message reference ID at **408,** then, at **416,** a suitable request is sent from the server back to the device requesting more complete message details (e.g., the text of the message) as it may exist in the messages sent file of the device **100.**

After sending the initial message reference ID at **402**, the device **100** enters a timed wait loop **418, 420** waiting either confirmation of the resend or a request for more message data to come back to it from the server. If a timely return message is not received, then an error message is displayed at **422** and exit of the sub-routine is taken at **424.** On the other hand, if a timely returning message is received, then a test is made at **426** to see whether the returned signal indicates a need to send the entire message (if available) back to the server **14.** If not, then exit is immediately taken at **424.** On the other hand, if the server does not have enough information to resend the message from its own files, then the entire message text is sent from the device back to the server at **428** before the device reenters the timed wait loop **418, 420** (to again await a confirmation of the resend having been successfully accomplished at the server **14).**

If the server **14** sends a request for the entire message at **416,** then it enters timed wait loop **430, 432** awaiting the requested further message data **434.** If timely received, then control is passed back to **410** where the message is resent. If not timely received, then an error message is displayed at **436** and the sub-routine is exited at **438.**

As those in the art will appreciate, the above described exemplary embodiments may be modified or varied in many ways while still being within the scope of the appended claims.

## Claims

1. A mobile wireless email communication device (100) capable of sending, receiving and re-sending email messages via an associated message server, said mobile device being **characterized by**:
a stored sent messages file (100a) including at least (a) unique message ID data and (b) user recognizable message identifying data for each of plural previously sent email messages;
message resend logic (108a) linked to said stored sent messages file which is configured to, in response to a user resend command, initially send to said associated server abbreviated resend message request that includes said unique message ID data but not an entire email message text; and
sent message file synchronization logic which is configured to exchange communications with said message server related to the content of a respectively corresponding sent messages file at the message server and thereby maintain in the mobile device sent messages file, for each sent message then stored at the message server, said at least (a) unique message ID data and (b) user-recognizable message identifying data.

2. A mobile wireless email communication device as in claim 1 wherein said message resend logic is configured to initially send to said associated server a resend message request including as its data payload substantially only said unique message ID data.

3. A mobile wireless email communication device as in claim 1 wherein said message resend logic is also configured to respond to a subsequent request from said server to send to said server a more extensive resend message request that includes substantially an entire email message text.

4. A mobile wireless email communications device as in claim 1 wherein:
said sent message file synchronization logic is also configured to send back to said server, upon request therefrom substantially an entire email sent message record if a full copy of such sent email message is not found at the server during a synchronization session.

5. A method for resending email messages from mobile wireless email communication device capable of sending, receiving and re-sending email messages via an associated message server, said method being **characterized by**:
maintaining (300) a stored sent messages file including at least (a) unique message ID data and (b) user recognizable message identifying data for each of plural previously sent email messages;
in response to a user resend command (400), initially sending (402) to said associated server abbreviated resend message request that includes said unique message ID data but not an entire email message text; and
exchanging communications between said message server and said device related to the content of a respectively corresponding sent messages file at the message server and thereby maintaining in the mobile device sent messages file, for each sent message then stored at the message server, said at least (a) unique message ID data and (b) user-recognizable message identifying data.

6. A method as in claim 5 wherein:
said initially sending step sends to said associated server a resend message request including as its data payload substantially only said unique message ID data.

7. A method as in claim 5 further comprising:
in response to a subsequent request from said server, sending to said server from said device a more extensive resend message request that includes substantially an entire email message text.

8. A method as in claim 5 further comprising:
sending substantially an entire email send message record from the device to the server if a full copy of such sent email message is not found at the server during a synchronization session.

9. A stored computer program medium in which is stored at least one computer program which, when executed, effects a method for resending email messages from mobile wireless email communication device capable of sending, receiving and re-sending email messages via an associated message server, said method being **characterized by**:
maintaining (300) a stored sent messages file including at least (a) unique message ID data and (b) user recognizable message identifying data for each of plural previously sent email messages;
in response to a user resend command (400), initially sending (402) to said associated server abbreviated resend message request that includes said unique message ID data but not an entire email message text; and
exchanging communications between said message server and said device related to the content of a respectively corresponding sent messages file at the message server and thereby maintaining in the mobile device sent messages file, for each sent message then stored at the message server, said at least (a) unique message ID data and (b) user-recognizable message identifying data.

10. A stored computer program medium as in claim 9 wherein:
said initially sending step sends to said associated server a resend message request including as its data payload substantially only said unique message ID data.

11. A stored computer program medium as in claim 9 wherein said method further comprises:
in response to a subsequent request from said server, sending to said server from said device a more extensive resend message request that includes substantially an entire email message text.

12. A stored computer program medium as in claim 9 wherein said method further comprising:
sending substantially an entire email sent message record from the device to the server if a full copy of such sent email message is not found at the server during a synchronization session.

13. An email message server capable of sending, receiving and re-sending email messages via an associated mobile wireless communication device, said server being **characterized by**:
a stored sent messages file (304) including (a) unique message ID data, (b) user-recognizable message identifying data and (c) associated message text for each of a plurality of previously sent email messages;
message resend logic (406) linked to said sent messages file which is configured to, in response to an abbreviated resend message request received from mobile wireless communication device including said unique message ID data for a particular sent message to be resent, use the unique message ID data to search for a respectively corresponding locally stored sent message text and, if found, to resend that found email message; and
sent message file synchronization logic which is configured to exchange communications with said mobile wireless communication device related to the content of a respectively corresponding sent messages file at the mobile device and thereby maintain in the server sent messages file, for each sent message then stored in the mobile device, said (a) unique message ID data, (b) user-recognizable message identifying data and (c) associated message text.

14. An email message server as in claim 13 wherein said message resend logic is also configured to send to said mobile wireless communication device a request for said respectively corresponding stored sent message text if it is not found locally at the server.

15. A method for resending email messages from an email message server capable of sending, receiving and re-sending email messages via an associated mobile wireless communication device, said method being **characterized by**:
maintaining (304) a stored sent messages file including (a) unique message ID data, (b) user-recognizable message identifying data and (c) associated message text for each of a plurality of previously sent email messages;
in response (406) to an abbreviated resend message request received from mobile wireless communication device including said unique message ID data for a particular sent message to be resent, using the unique message ID data to search for a respectively corresponding locally stored sent message text and, if found, to resend that found email message; and
exchanging communications between said mobile wireless communication device and said server related to the content of a respectively corresponding sent messages file at the mobile device and thereby maintain in the server sent messages file, for each sent message then stored in the mobile device, said (a) unique message ID data, (b) user-recognizable message identifying data and (c) associated message text.

16. A method as in claim 15 wherein a request for said respectively corresponding stored sent message text is sent to the device if it is not found locally at the server.

17. A stored computer program medium in which is stored at least one computer program which when executed, effects a method for resending email messages from an email message server capable of sending, receiving and re-sending email messages via an associated mobile wireless communication device, said method being **characterized by**:
maintaining (304) a stored sent messages file including (a) unique message ID data, (b) user-recognizable message identifying data and (c) associated message text for each of a plurality of previously sent email messages;
in response (406) to an abbreviated resend message request received from mobile wireless communication device including said unique message ID data for a particular sent message to be resent, using the unique message ID data to search for a respectively corresponding locally stored sent message text and, if found, to resend that found email message; and
exchanging communications between said mobile wireless communication device and said server related to the content of a respectively corresponding sent messages file at the mobile device and thereby maintain in the server sent messages file, for each sent message then stored in the mobile device, said (a) unique message ID data, (b) user-recognizable message identifying data and (c) associated message text.

18. A stored computer program medium as in claim 17 wherein a request for said respectively corresponding stored sent message is sent to the device if it is not found locally at the server.

## Patentansprüche

1. Mobile drahtlose E-Mail-Kommunikationsvorrichtung (100), die fähig ist, über einen zugehörigen Nachrichtenserver E-Mail-Nachrichten zu verschicken, zu empfangen und erneut zu verschicken, die Mobilvorrichtung **gekennzeichnet durch**
eine Datei (100a) gespeicherter verschickter Nachrichten, die für jede der mehreren zuvor verschicken E-Mail-Nachrichten mindestens (a) eindeutige Nachrichtenkennungsdaten und (b) benutzererkennbare Nachrichtenidentifikationsdaten enthält,
Logik (108a) zum erneuten Nachrichtenverschicken, die mit der Datei verschickter Nachrichten verbunden ist, die dazu ausgelegt ist, als Reaktion auf einen Benutzerbefehl zum erneuten Verschicken zunächst dem zugehörigen Server eine abgekürzte Anfrage zum erneuten Nachrichtenverschicken zu schicken, welche die eindeutigen Nachrichtenkennungsdaten aber nicht den ganzen E-Mail-Nachrichtentext enthält, und
Dateisynchronisationslogik verschickter Nachrichten, die dazu ausgelegt ist, Kommunikationen mit dem Nachrichtenserver in Bezug auf Inhalt einer jeweilig entsprechenden Datei verschickter Nachrichten beim Nachrichtenserver auszutauschen und **dadurch** in der Datei verschickter Nachrichten der Mobilvorrichtung für jede verschickte, dann auf dem Nachrichtenserver gespeicherte Nachricht mindestens (a) die eindeutig Nachrichtkennungsdaten und (b) die benutzererkennbaren Nachrichtenidentifikationsdaten zu behalten.

2. Mobile drahtlose E-Mail-Kommunikationsvorrichtung nach Anspruch 1, wobei die Logik zum erneuten Nachrichtenverschicken dazu ausgelegt ist, dem zugehörigen Server zunächst eine Anfrage zum erneuten Nachrichtenschicken zu schicken, die als ihre Datenladung im Wesentlichen lediglich die eindeutigen Nachrichtenkennungsdaten enthält.

3. Mobile drahtlose E-Mail-Kommunikationsvorrichtung nach Anspruch 1, wobei die Logik zum erneuten Nachrichtenschicken auch dazu ausgelegt ist, auf eine darauffolgende Anfrage vom Server zu reagieren, ihm eine ausführlichere Anfrage zum erneuten Nachrichtenschicken zu schicken, die im Wesentlichen den ganzen E-Mail-Nachrichtentext enthält.

4. Mobile drahtlose E-Mail-Kommunikationsvorrichtung nach Anspruch 1, wobei die Dateisynchronisationslogik verschickter Nachrichten auch dazu ausgelegt ist, dem Server auf dessen Anfrage im Wesentlichen eine ganze Aufzeichnung einer über E-Mail verschickten Nachricht zu schicken, wenn während einer Synchronisationssitzung auf dem Server eine volle Kopie einer solchen verschickten E-Mail-Nachricht nicht gefunden wird.

5. Verfahren zum erneuten Verschicken von E-Mail-Nachrichten von einer mobilen, drahtlosen E-Mail-Kommunikationsvorrichtung, die fähig ist, über einen zugehörigen Nachrichtenserver E-Mail-Nachrichten zu verschicken, zu empfangen und erneut zu verschicken, wobei das Verfahren **dadurch gekennzeichnet ist, dass**
eine Datei gespeicherter verschickter Nachrichten behalten (300) wird, die für jede der mehreren zuvor verschicken E-Mail-Nachrichten mindestens (a) eindeutige Nachrichtenkennungsdaten und (b) benutzererkennbare Nachrichtenidentifikationsdaten enthält,
als Reaktion auf einen Benutzerbefehl (400) zum erneuten Verschicken zunächst dem zugehörigen Server eine abgekürzte Anfrage zum erneuten Nachrichtenschicken geschickt (402) wird, welche die eindeutigen Nachrichtenkennungsdaten aber nicht den ganzem E-Mail-Nachrichtentext enthält, und
Kommunikationen zwischen dem Nachrichtenserver und der Vorrichtung in Bezug auf Inhalt einer jeweilig entsprechenden Datei verschickter Nachrichten beim Nachrichtenserver ausgetauscht werden und **dadurch** in der Datei verschickter Nachrichten der Mobilvorrichtung für jede verschickte, dann auf dem Nachrichtenserver gespeicherte Nachricht mindestens (a) die eindeutigen Nachrichtkennungsdaten und (b) die benutzererkennbaren Nachrichtenidentifikationsdaten behalten werden.

6. Verfahren nach Anspruch 5, wobei
beim anfänglichen Verschicken dem zugehörigen Server eine Anfrage zum erneuten Nachrichtenverschicken geschickt wird, die als ihre Datenladung im Wesentlichen lediglich die eindeutigen Nachrichtenkennungsdaten enthält.

7. Verfahren nach Anspruch 5, in dem ferner
als Reaktion auf eine darauffolgende Anfrage vom Server von der Vorrichtung an den Server eine ausführlichere Anfrage zum erneuten Nachrichtenverschicken geschickt wird, die im Wesentlichen den ganzen E-Mail-Nachrichtentext enthält.

8. Verfahren nach Anspruch 5, in dem ferner
von der Vorrichtung an den Server im Wesentlichen eine ganze Aufzeichnung einer über E-Mail verschickten Nachricht geschickt wird, wenn während einer Synchronisationssitzung auf dem Server eine volle Kopie einer solchen verschickten E-Mail-Nachricht nicht gefunden wird.

9. Medium für gespeicherte Computerprogramme, wobei in dem Medium mindestens ein Computerprogramm gespeichert ist, das, wenn es ausgeführt wird, ein Verfahren zum erneuten Verschicken von E-Mail-Nachrichten von einer mobilen drahtlosen E-Mail-Kommunikationsvorrichtung durchführt, die fähig ist, über einen zugehörigen Nachrichtenserver E-Mail-Nachrichten zu verschicken, zu empfangen und erneut zu verschicken, wobei das Verfahren **dadurch gekennzeichnet ist, dass**
eine Datei gespeicherter verschickter Nachrichten behalten (300) wird, die für jede der mehreren zuvor verschicken E-Mail-Nachrichten mindestens (a) eindeutige Nachrichtenkennungsdaten und (b) benutzererkennbare Nachrichtenidentifikationsdaten enthält,
als Reaktion auf einen Benutzerbefehl (400) zum erneuten Verschicken zunächst dem zugehörigen Server eine abgekürzte Anfrage zum erneuten Nachrichtenverschicken geschickt (402) wird, welche die eindeutigen Nachrichtenkennungsdaten aber nicht den ganzem E-Mail-Nachrichtentext enthält, und
Kommunikationen zwischen dem Nachrichtenserver und der Vorrichtung in Bezug auf Inhalt einer jeweilig entsprechenden Datei verschickter Nachrichten beim Nachrichtenserver ausgetauscht werden und **dadurch** in der Datei verschickter Nachrichten der Mobilvorrichtung für jede verschickte, dann auf dem Nachrichtenserver gespeicherte Nachricht mindestens (a) die eindeutigen Nachrichtkennungsdaten und (b) die benutzererkennbaren Nachrichtenidentifikationsdaten behalten werden.

10. Medium für gespeicherte Computerprogramme nach Anspruch 9, wobei ferner
beim anfänglichen Verschicken dem zugehörigen Server eine Anfrage zum erneuten Nachrichtenverschicken geschickt wird, die als ihre Datenladung im Wesentlichen lediglich die eindeutigen Nachrichtenkennungsdaten enthält.

11. Medium für gespeicherte Computerprogramme nach Anspruch 9, wobei in dem Verfahren ferner
als Reaktion auf eine darauffolgende Anfrage vom Server von der Vorrichtung an den Server eine ausführlichere Anfrage zum erneuten Nachrichtenverschicken geschickt wird, die im Wesentlichen den ganzen E-Mail-Nachrichtentext enthält.

12. Medium für gespeicherte Computerprogramme nach Anspruch 9, wobei in dem Verfahren ferner
von der Vorrichtung an den Server im Wesentlichen eine ganze Aufzeichnung einer über E-Mail verschickten Nachricht geschickt wird, wenn während einer Synchronisationssitzung auf dem Server eine volle Kopie einer solchen verschickten E-Mail-Nachricht nicht gefunden wird.

13. E-Mail-Nachrichtenserver, der fähig ist, über eine zugehörige, mobile, drahtlose Kommunikationsvorrichtung E-Mail-Nachrichten zu verschicken, zu empfangen und erneut zu verschicken, der Server **gekennzeichnet durch**
eine Datei (304) gespeicherter verschickter Nachrichten, die für jede der mehreren zuvor verschicken E-Mail-Nachrichten (a) eindeutige Nachrichtenkennungsdaten, (b) benutzererkennbare Nachrichtenidentifikationsdaten und (c) zugehörigen Nachrichtentext enthält,
Logik (406) zum erneuten Nachrichtenverschicken, die mit der Datei verschickter Nachrichten verbunden ist und dazu ausgelegt ist, als Reaktion auf eine von der mobilen, drahtlosen Kommunikationsvorrichtung empfangene, abgekürzte Anfrage zum erneuten Nachrichtenverschicken, welche die eindeutigen Nachrichtenkennungsdaten für eine bestimmte erneut zu verschickende verschickte Nachricht enthält, die eindeutigen Nachrichtenkennungsdaten zu verwenden, um nach einem jeweilig entsprechenden, lokal gespeicherten verschickten Nachrichtentext zu suchen und, falls gefunden, jene gefundene E-Mail-Nachricht erneut zu verschicken, und
Dateisynchronisationslogik verschickter Nachrichten, die dazu ausgelegt ist, Kommunikationen mit der mobilen, drahtlosen Kommunikationsvorrichtung in Bezug auf Inhalt einer jeweilig entsprechenden Datei verschickter Nachrichten bei der mobilen Vorrichtung auszutauschen und **dadurch** in der Datei verschickter Nachrichten des Servers für jede verschickte, dann in der Mobilvorrichtung gespeicherte Nachricht (a) die eindeutigen Nachrichtkennungsdaten, (b) die benutzererkennbaren Nachrichtenidentifikationsdaten und (c) zugehörigen Nachrichtentext zu behalten.

14. E-Mail-Nachrichtenserver nach Anspruch 13, wobei die Logik zum erneuten Nachrichtenverschicken auch dazu ausgelegt ist, der zugehörigen mobilen, drahtlosen Vorrichtung eine Anfrage nach dem jeweilig entsprechenden gespeicherten verschickten Nachrichtentext zu schicken, wenn er lokal auf dem Server nicht gefunden wird.

15. Verfahren zum erneuten Verschicken von E-Mail-Nachrichten von einem E-Mail-Nachrichtenserver, der fähig ist, über eine zugehörige mobile, drahtlose Kommunikationsvorrichtung E-Mail-Nachrichten zu verschicken, zu empfangen und erneut zu verschicken, wobei das Verfahren **dadurch gekennzeichnet ist, dass**
eine Datei gespeicherter verschickter Nachrichten behalten (304) wird, die für jede der mehreren zuvor verschicken E-Mail-Nachrichten mindestens (a) eindeutige Nachrichtenkennungsdaten, (b) benutzererkennbare Nachrichtenidentifikationsdaten und (c) zugehörigen Nachrichtentext enthält,
als Reaktion (406) auf eine von der mobilen, drahtlosen Kommunikationsvorrichtung empfangene, abgekürzte Anfrage zum erneuten Nachrichtenverschicken, wobei die Anfrage die eindeutigen Nachrichtenkennungsdaten für eine bestimmte erneut zu verschickende verschickte Nachricht enthält, die eindeutigen Nachrichtenkennungsdaten verwendet werden, um nach einem jeweilig entsprechenden, lokal gespeicherten verschickten Nachrichtentext zu suchen und, falls gefunden, um jene gefundene E-Mail-Nachricht erneut zu verschicken, und
Kommunikationen zwischen der mobilen, drahtlosen Kommunikationsvorrichtung und dem Server in Bezug auf Inhalt einer jeweilig entsprechenden Datei verschickter Nachrichten bei der Mobilvorrichtung ausgetauscht werden und **dadurch** in der Datei verschickter Nachrichten des Servers für jede verschickte, dann in der Mobilvorrichtung gespeicherte Nachricht (a) die eindeutigen Nachrichtkennungsdaten, (b) die benutzererkennbaren Nachrichtenidentifikationsdaten und (c) zugehöriger Nachrichtentext behalten werden.

16. Verfahren nach Anspruch 15, wobei eine Anfrage nach dem jeweilig entsprechenden gespeicherten verschickten Nachrichtentext verschickt wird, wenn er lokal auf dem Server nicht gefunden wird.

17. Medium für gespeicherte Computerprogramme, wobei in dem Medium mindestens ein Computerprogramm gespeichert ist, das, wenn es ausgeführt wird, ein Verfahren zum erneuten Verschicken von E-Mail-Nachrichten von einem E-Mail-Nachrichtenserver durchführt, der fähig ist, über eine zugehörige mobile, drahtlose Kommunikationsvorrichtung E-Mail-Nachrichten zu verschicken, zu empfangen und erneut zu verschicken, wobei das Verfahren **dadurch gekennzeichnet ist, dass** eine Datei gespeicherter verschickter Nachrichten behalten (304) wird, die für jede der mehreren zuvor verschicken E-Mail-Nachrichten mindestens (a) eindeutige Nachrichtenkennungsdaten, (b) benutzererkennbare Nachrichtenidentifikationsdaten und (c) zugehörigen Nachrichtentext enthält,
als Reaktion (406) auf eine von der mobilen, drahtlosen Kommunikationsvorrichtung empfangene, abgekürzte Anfrage zum erneuten Nachrichtenverschicken, welche die eindeutigen Nachrichtenkennungsdaten für eine bestimmte erneut zu verschickende verschickte Nachricht enthält, die eindeutigen Nachrichtenkennungsdaten verwendet werden, um nach einem jeweilig entsprechenden, lokal gespeicherten verschickten Nachrichtentext zu suchen und, falls gefunden, um jene gefundene E-Mail-Nachricht erneut zu verschicken, und
Kommunikationen zwischen der mobilen, drahtlosen Kommunikationsvorrichtung und dem Server in Bezug auf Inhalt einer jeweilig entsprechenden Datei verschickter Nachrichten bei der Mobilvorrichtung ausgetauscht werden und **dadurch** in der Datei verschickter Nachrichten des Servers für jede verschickte, dann in der Mobilvorrichtung gespeicherte Nachricht (a) die eindeutigen Nachrichtkennungsdaten, (b) die benutzererkennbaren Nachrichtenidentifikationsdaten und (c) zugehöriger Nachrichtentext behalten werden.

18. Medium für gespeicherte Computerprogramme nach Anspruch 17, wobei an die Vorrichtung eine Anfrage nach der jeweilig entsprechenden gespeicherten, verschickten Nachricht geschickt wird, wenn sie lokal auf dem Server nicht gefunden wird.

## Revendications

1. Dispositif de communication par courrier électronique mobile sans fil (100) capable d'émettre, de recevoir et de réémettre des messages de courrier électronique par l'intermédiaire d'un serveur de messagerie associé, ledit dispositif mobile étant **caractérisé par** :
un fichier de messages émis stockés (100a) comportant au moins (a) des données d'ID (identification) de messages uniques et (b) des données d'identification de messages reconnaissables par l'utilisateur pour chacun de multiples messages de courrier électronique précédemment envoyés ;
une logique de réémission de messages (108a) liée audit fichier de messages émis stockés qui est configurée pour, en réponse à une commande de réémission d'un utilisateur, envoyer initialement audit serveur associé une demande de réémission de message abrégée qui comporte lesdites données d'ID de messages uniques mais pas la totalité du texte d'un message de courrier électronique ; et
une logique de synchronisation de fichiers de messages émis qui est configurée pour échanger avec ledit serveur de messagerie des communications relatives au contenu d'un fichier de messages émis correspondant respectivement à celles-ci sur le serveur de messagerie et ainsi maintenir à jour dans le fichier de messages émis du dispositif mobile, pour chaque message émis puis stocké sur le serveur de messagerie, au moins (a) lesdites données d'ID de messages uniques, et (b) lesdites données d'identification de messages reconnaissables par l'utilisateur.

2. Dispositif de communication par courrier électronique sans fil mobile selon la revendication 1, dans lequel ladite logique de réémission de messages est configurée pour émettre initialement vers ledit serveur associé, une demande de réémission de message dont la charge utile est sensiblement uniquement constituée desdites données d'ID de messages uniques.

3. Dispositif de communication par courrier électronique mobile sans fil selon la revendication 1, dans lequel ladite logique de réémission de messages est également configurée pour répondre à une demande ultérieure émanant dudit serveur pour émettre vers ledit serveur une demande de réémission de message plus détaillée qui contient sensiblement la totalité du texte d'un message de courrier électronique.

4. Dispositif de communication par courrier électronique mobile sans fil selon la revendication 1, dans lequel :
ladite logique de synchronisation de fichier de messages émis est également configurée pour renvoyer audit serveur, lors d'une demande émanant de celui-ci, sensiblement la totalité d'un enregistrement de message de courrier électronique émis si une copie complète de ce message de courrier électronique émis n'est pas trouvée sur le serveur au cours d'une session de synchronisation.

5. Procédé destiné à réémettre des messages de courrier électronique à partir d'un dispositif de communication par courrier électronique mobile sans fil capable d'émettre, de recevoir et de réémettre des messages de courrier électronique par l'intermédiaire d'un serveur de messagerie associé, ledit procédé étant **caractérisé par** :
le maintien à jour (300) d'un fichier de messages émis stockés contenant au moins (a) des données d'ID de messages uniques et (b) des données d'identification de messages reconnaissables par l'utilisateur pour chacun de multiples messages de courrier électronique précédemment émis ;
en réponse à une commande de réémission de l'utilisateur (400), l'émission initiale (402) vers ledit serveur associé d'une demande de réémission de message abrégée qui contient lesdites données d'ID de messages uniques mais pas la totalité du texte d'un message de courrier électronique ; et
l'échange, entre ledit serveur de messagerie et ledit dispositif, de communications relatives au contenu d'un fichier de messages émis correspondant respectivement à celles-ci sur le serveur de messagerie et ainsi, le maintien à jour, dans le fichier de messages émis du dispositif mobile, pour chaque message émis puis stocké sur le serveur de messagerie, au moins (a) desdites données d'ID de messages uniques, et (b) desdites données d'identification de messages reconnaissables par l'utilisateur.

6. Procédé selon la revendication 5, dans lequel :
ladite étape d'émission initiale émet vers ledit serveur associé une demande de réémission de message dont la charge utile des données est sensiblement uniquement constituée desdites données d'ID de messages uniques.

7. Procédé selon la revendication 5, comprenant en outre :
en réponse à une demande ultérieure émanant dudit serveur, l'émission vers ledit serveur, à partir dudit dispositif, d'une demande de réémission de message plus détaillée qui contient sensiblement la totalité du texte d'un message de courrier électronique.

8. Procédé selon la revendication 5, comprenant en outre :
l'émission de sensiblement la totalité de l'enregistrement d'un message de courrier électronique émis du dispositif vers le serveur si une copie complète de ce message de courrier électronique émis n'est pas trouvée sur le serveur au cours d'une session de synchronisation.

9. Support de stockage de programme informatique sur lequel est stocké au moins un programme informatique qui, lorsqu'il est exécuté, met en oeuvre un procédé destiné à réémettre des messages de courrier électronique à partir d'un dispositif de communication par courrier électronique sans fil mobile capable d'émettre, de recevoir et de réémettre des messages de courrier électronique par l'intermédiaire d'un serveur de messagerie associé, ledit procédé étant **caractérisé par** :
le maintien à jour (300) d'un fichier de messages émis stockés contenant au moins (a) des données d'ID de messages uniques et (b) des données d'identification de messages reconnaissables par l'utilisateur pour chacun de multiples messages de courrier électronique précédemment émis ;
en réponse à un ordre de réémission de l'utilisateur (400), l'émission initiale (402) vers ledit serveur associé, d'une demande de réémission de message abrégée qui contient lesdites données d'ID de messages uniques mais pas la totalité du texte d'un message de courrier électronique ; et
l'échange, entre ledit serveur de messagerie et ledit dispositif, de communications relatives au contenu d'un fichier de messages émis correspondant respectivement à celles-ci, sur le serveur de messagerie, et ainsi, le maintien à jour dans le fichier de messages envoyés du dispositif mobile, pour chaque message émis puis stocké sur le serveur de messagerie, au moins (a) desdites données d'ID de messages uniques, et (b) desdites données d'identification de message reconnaissables par l'utilisateur.

10. Support de stockage de programme informatique selon la revendication 9, dans lequel :
ladite étape d'émission initiale émet vers ledit serveur associé une demande de réémission de message dont la charge utile de données est sensiblement uniquement constituée desdites données d'ID de messages uniques.

11. Support de programme informatique stocké selon la revendication 9, dans lequel ledit procédé comprend en outre :
en réponse à une demande ultérieure émanant dudit serveur, l'émission vers ledit serveur, à partir dudit dispositif, d'une demande de réémission de message plus détaillée qui contient sensiblement la totalité du texte d'un message de courrier électronique.

12. Support de stockage de programme informatique selon la revendication 9, dans lequel ledit procédé comprend en outre :
l'émission de sensiblement la totalité de l'enregistrement d'un message de courrier électronique émis du dispositif vers le serveur si une copie complète de ce message de courrier électronique émis n'est pas trouvée sur le serveur au cours d'une session de synchronisation.

13. Serveur de messagerie de courrier électronique capable d'émettre, de recevoir et de réémettre des messages de courrier électronique par l'intermédiaire d'un dispositif de communication mobile sans fil associé, ledit serveur étant **caractérisé par** :
un fichier de messages émis stockés (304) contenant (a) des données d'ID de messages uniques, (b) des données d'identification de messages reconnaissables par l'utilisateur, et (c) un texte de message associé pour chacun d'une pluralité messages de courrier électronique précédemment émis ;
une logique de réémission de messages (406) liée audit fichier de messages émis, qui est configurée pour, en réponse à une demande de réémission de message abrégée reçue du dispositif de communication mobile sans fil contenant lesdites données d'ID de messages uniques pour un message émis particulier devant être réémis, utiliser les données d'ID de messages uniques pour rechercher le texte d'un message émis stocké localement correspondant respectivement à celles -ci et, s'il est trouvé, pour réémettre ce message de courrier électronique trouvé ; et
une logique de synchronisation de fichier de messages émis qui est configurée pour échanger avec ledit dispositif de communication mobile sans fil des communications relatives au contenu d'un fichier de messages émis correspondant respectivement à celles-ci, sur le dispositif mobile, et ainsi maintenir à jour dans le fichier de messages émis du serveur, pour chaque message émis puis stocké sur le dispositif mobile, (a) lesdites données d'ID de messages uniques, (b) lesdites données d'identification de messages reconnaissables par l'utilisateur, et (c) ledit texte de message associé.

14. Serveur de messagerie de courrier électronique selon la revendication 13, dans lequel ladite logique de réémission de messages est également configurée pour émettre vers ledit dispositif de communication mobile sans fil une demande portant sur ledit texte du message émis stocké correspondant respectivement si celui-ci n'est pas trouvé localement sur le serveur.

15. Procédé destiné à réémettre des messages de courrier électronique à partir d'un serveur de messagerie de courrier électronique capable d'émettre, de recevoir et de réémettre des messages de courrier électronique par l'intermédiaire d'un dispositif de communication mobile sans fil associé, ledit procédé étant **caractérisé par** :
le maintien à jour (304) d'un fichier de messages émis stockés contenant (a) des données d'ID de messages uniques, (b) des données d'identification de messages reconnaissables par l'utilisateur, et (c) un texte de message associé pour chacun d'une pluralité messages de courrier électronique précédemment émis ;
en réponse (406) à une demande de réémission de message abrégée reçue du dispositif de communication mobile sans fil contenant lesdites données d'ID de messages uniques pour un message émis particulier devant être réémis, l'utilisation des données d'ID de messages uniques pour recherche le texte d' un message émis stocké localement correspondant respectivement à celles-ci et, s'il est trouvé, pour réémettre ce message de courrier électronique trouvé ; et
l'échange entre ledit dispositif de communication mobile sans fil et ledit serveur de communications qui sont relatives au contenu d'un fichier de messages émis correspondant respectivement à celles-ci, sur le dispositif mobile, et ainsi, le maintien à jour dans le fichier de messages émis du serveur, pour chaque message émis puis stocké sur le dispositif mobile, (a) desdites données d'ID de messages uniques, (b) desdites données d'identification de messages reconnaissables par l'utilisateur, et (c) dudit texte de message associé.

16. Procédé selon la revendication 15, dans lequel une demande portant sur ledit texte du message émis stocké correspondant respectivement est émise vers le dispositif si ce texte n'est pas trouvé localement sur le serveur.

17. Support de stockage de programme informatique sur lequel est stocké au moins un programme informatique qui, lorsqu'il est exécuté, met en oeuvre un procédé destiné à réémettre des messages de courrier électronique à partir d'un serveur de messagerie de courrier électronique capable d'émettre, de recevoir et de réémettre des messages de courrier électronique par l'intermédiaire d'un dispositif de communication mobile sans fil associé, ledit procédé étant **caractérisé par** :
le maintien à jour (304) d'un fichier de messages émis stockés contenant (a) des données d'ID de messages uniques, (b) des données d'identification de messages reconnaissables par l'utilisateur et (c) un texte de message associé pour chacun d'une pluralité messages de courrier électronique précédemment émis ;
en réponse (406) à une demande de réémission de message abrégée reçue d'un dispositif de communication mobile sans fil contenant lesdites données d'ID de messages uniques pour un message émis particulier devant être réémis, l'utilisation des données d'ID de messages uniques pour rechercher le texte d'un message émis stocké localement correspondant respectivement à celles-ci et, s'il est trouvé, pour réémettre ce message de courrier électronique trouvé ; et
l'échange entre ledit dispositif de communication mobile sans fil et ledit serveur, de communications relatives au contenu d'un fichier de messages émis correspondant respectivement à celles-ci sur le dispositif mobile, et ainsi, le maintien à jour dans le fichier de messages émis du serveur, pour chaque message émis puis stocké sur le dispositif mobile, (a) desdites données d'ID de messages uniques, (b) desdites données d'identification de messages reconnaissables par l'utilisateur et (c) dudit texte de message associé.

18. Support de stockage de programme informatique selon la revendication 17, dans lequel une demande portant sur ledit message émis stocké correspondant respectivement est émise vers le dispositif si celui-ci n'est pas trouvé localement sur le serveur.
